# EUROPÄISCHE PATENTSCHRIFT

(11) **EP 4 067 225 B1**
(45) Veröffentlichungstag und Bekanntmachung des Hinweises auf die Patenterteilung: **17.06.2026**
(21) Anmeldenummer: 22165433.8
(22) Anmeldetag: 30.03.2022
(51) Int. Cl.: B64C 1/20, B64D 9/00, B64C 1/18

(54) **FRACHTLADESYSTEM, RIEGELELEMENT SOWIE VERFAHREN ZUM UMRÜSTEN EINES PASSAGIERDECKS IN EIN FRACHTDECK**
FREIGHT LOADING SYSTEM, LOCKING ELEMENT AND METHOD FOR RETROFITTING A PASSENGER DECK INTO A CARGO DECK
SYSTÈME DE CHARGEMENT DE FRET, ÉLÉMENT DE VERROUILLAGE, AINSI QUE PROCÉDÉ DE MISE À NIVEAU D'UN PONT DES PASSAGERS À UN PONT À FRET

(30) Priorität: 02.04.2021 DE 102021108473; 11.06.2021 DE 102021115146
(43) Veröffentlichungstag der Anmeldung: 05.10.2022
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Meissner Bolte Partnerschaft mbB

(56) Entgegenhaltungen:
- DE-A1- 102006 048 405
- DE-A1- 3 107 745
- DE-A1- 4 423 072
- DE-B3- 102008 060 550
- DE-B3- 102018 108 950
- US-A- 4 000 870

## Beschreibung

Die Erfindung betrifft ein Frachtladesystem, ein Riegelelement sowie ein Verfahren zum Umrüsten eines Passagierdecks eines Flugzeugs in ein Frachtdeck.

DE 10 2008 060 550 B3 offenbart eine Anordnung zur Verlegung von elektrischen Kabeln im Fußbodenbereich eines Flugzeuges, wobei Kabelkanäle bildende Längsführungselemente vorgesehen sind, die im wesentlichen in Flugzeuglängsrichtung parallel zu im Flugzeugfußboden angeordneten Sitzschienen verlaufen, wobei in einer Fußbodenplatte, die zwischen zwei parallelen Sitzschienen, in ummittelbarer Nähe einer der beiden Sitzschienen eine parallel zur Sitzschiene verlaufende längliche nutförmige Ausnehmung vorgesehen ist, und dass in der nutförmigen Ausnehmung ein längliches Strangpressprofil angeordnet und in der Fußbodenplatte integriert ist, welches einen länglichen Schubkasten zur Übertragung von Schubkräften und von gegebenenfalls zusätzlich auftretenden Kräften sowie einen oberhalb des Schubkastens angeordneten länglichen Kabelschacht zur Aufnahme von elektrischen Kabeln aufweist. Riegelelemente mit Krallen, zur Befestigung an Sitzschienen, sind beispielsweise aus DE 3107745 A1 oder DE 10 2006 048 405 A1 bekannt.

Flugzeuge werden normalerweise im Laufe deren Lebensdauer für unterschiedliche Zwecke eingesetzt. Dabei werden Flugzeuge für den Passagiertransport nach einer entsprechenden Einsatzdauer vorwiegend für den Transport von Frachtgütern bzw. Frachtstücken verwendet. Die Flugzeuge können generell ein Hauptdeck ("Main Deck") und ein unteres Deck ("Lower Deck") aufweisen, in dem während des Einsatzes des Flugzeugs für den Passagiertransport Frachtstücke transportiert werden.

Bei dem Transport von Ladung in Flugzeugen werden häufig Frachtstücke, z.B. Container oder Paletten ("Unit Load Devices - ULDs") verwendet, die quaderförmig oder trapezförmig sind oder eine Form mit einer speziellen Außenkontur aufweisen. Derartige Container oder Paletten können abhängig vom Laderaum des Flugzeugs längsgeladen oder quergeladen werden. So gibt es für Container und Paletten, beispielsweise für die zivile Luftfahrt, folgende im Zusammenhang mit dieser Anmeldung relevante Normgrößen. Die nachfolgenden genormten Abmessungen der Container und Paletten sind jeweils in Länge x Breite x Höhe angegeben.

Container und Paletten ("ULDs") werden, wie allgemein bekannt, gemäß einer Regelung der "International Air Transport Association" (IATA) durch drei Buchstaben eingestuft. Nachfolgend werden lediglich die Wichtigsten erläutert:
- Der erste Buchstabe definiert die Art des Frachtstückes. Der Buchstabe A weist auf einen zertifizierten Container oder der Buchstabe P auf eine zertifizierte Palette mit Netz-Kombination hin;
- Der zweite Buchstabe gibt eine Auskunft über die Bodengröße, d.h. die Grundfläche des Frachtstücks, und
- Der dritte Buchstabe beschreibt die Kontur oder die Bauart des Frachtstücks.

Container und Paletten für den Transport im Hauptdeck eines Flugzeugs weisen im Wesentlichen folgende genormten Abmessungen auf:
- 223,5 x 317,5 x 243,8 cm (88 x 125 x 96 Zoll). Diese Abmessungen treffen auf AAJ Container und PAG Paletten zu;
- 223,5 x 317,5 x 208,2 cm (88 x 125 x 82 Zoll). Solche Abmessungen weisen bspw. AAA, AAC, AAY und AAZ Container und PAG Paletten auf;
- 243,8 x 317,5 x 243,8 cm (96 x 125 x 96 Zoll). Derartige Frachtstücke sind als AMA und AMJ Container sowie PMC Paletten bekannt;
- 243,8 x 497,8 cm (96 x 196 Zoll) oder 243,8 x 605,7 cm (96 x 238,5 Zoll). Diese Abmessungen entsprechen der Grundfläche von Paletten mit einer spezifischen Kontur, die sich z.B. aus der Kontur eines Triebwerks oder eines Fahrzeugs oder von Sonderfracht ergibt. Derartige Paletten werden herkömmlicherweise als PRA oder PGA Paletten bezeichnet;
- 223,5 x 274,3 cm (88 x 108 Zoll) und 137,1 x 223,5 cm (54 x 88 Zoll).

Durch die Corona-Pandemie wurde der Luftfahrt Passagierverkehr sehr stark eingeschränkt. Damit brechen unweigerlich hohe Kapazitäten an Lower-Deck-Frachttransportvolumen weg. Gleichzeitig nimmt der Internethandel stetig weiter zu (nun unter anderem auch auf Grund der Pandemie). Somit werden Frachtkapazitäten in Flugzeugen immer knapper. Alle Rein-Frachtflugzeuge fliegen derzeit bereits am Anschlag des Möglichen. Einige Airlines gehen mittlerweile dazu über Passagiermaschinen als Frachtflugzeuge einzusetzen. Hierbei werden beispielsweise die Sitze (und evtl. auch Galleys) im Hauptdeck ausgebaut und Fracht wird einfach mittels Verzurrnetzen auf dem Boden befestigt.

Dies ermöglicht allerdings nur bedingt ein zügiges und sicheres Laden und Sichern der Fracht. Zudem wird das zur Verfügung stehende Volumen auf diese Art nicht optimal genutzt.

Allgemein gilt bei der Gestaltung eines Frachtdecks gegensätzlichen Forderungen nach großer Stabilität und geringem Gewicht zu begegnen. Darüber hinaus dürfen bei der Umrüstung weder die einzelnen Bauelemente noch der Einbau derselben allzu aufwendig sein, da dies die Kosten erhöht. Das Frachtdeck muss letztendlich hoch funktional, flexibel einsetzbar und gegen Fehlbedienung abgesichert sein. Jede Minute die ein Flugzeug auf Grund des Ausfalls einer Komponente auf dem Boden verbringt generiert hohe Kosten bei den Betreibern.

Der Erfindung liegt die Aufgabe zugrunde, ein Frachtladesystem, ein Riegelelement sowie ein Verfahren zum Umrüsten eines Passagierdecks in ein Frachtdeck bereitzustellen, das es ermöglicht, schnell und einfach ein (voll) funktionsfähiges Frachtdeck bereitzustellen.

Diese Aufgabe wird durch die Ansprüche 1, 8 und 9 gelöst. gelöst.

Die deutliche Beabstandung der Aufnahmeebene von der Auflageebene nach unten hin kann sich auf einen Wert von 1 cm oder mehr belaufen. Insbesondere kann die Beabstandung zwischen 6 mm und 32 mm, vorzugsweise zwischen 12 mm bis 26 mm, weiter vorzugsweise 19 mm betragen. Konkret kann eine Beabstandung 19.05 mm (0.75 inch) betragen, wegen unterschiedlicher Systemhöhen von Mechanik (1.25 inch, 3.175 cm) und Rollenantriebseinheiten (2 inch, 5.08 cm). Die deutliche Beabstandung kann aber auch alternative als relative Werte, beispielsweise in Bezug auf die Gesamtsystemhöhe oder einzelne Komponenten des Frachtsystems definiert sein. Beispielsweise kann eine deutliche Beanstandung so definiert sein, dass sie größer als 10 %, insbesondere größer als 20 %, insbesondere größer als 30% der Aufbauhöhe der Lochschienenvorrichtung und/oder größer als 10% oder 20% des Abstands zwischen Querträger und Auflageebene ist.

Ein Gedanke der Erfindung besteht darin, üblicherweise ungenutzten Platz unterhalb von herkömmlichen Bodenmodulen zur Bereitstellung von Funktionseinrichtungen zu nutzen. Dies kann an ausgewählten Stellen, z.B. in Bereichen, in denen Rollenantriebseinheiten oder besonders voluminöse Riegeleinheiten, z.B. Mittelführungsriegel, benötigt werden, erfolgen. Die Systemhöhe des Frachtdecks insgesamt kann somit reduziert werden, was zu einer deutlichen Gewichtsreduktion führt.

Ein (weiterer) Gedanke der Erfindung besteht darin, eine schnelle und zuverlässige Umrüstung eines Passagierdecks zu einem Frachtdeck zu ermöglichen, das es ermöglicht ULDs, insbesondere auf dem Hauptdeck, zu laden und zu sichern.

Die Bodenmodule lassen sich vorteilhaft in Verbindung mit einem (modularen) Frachtsystem verwenden, das ohne größeren Umrüstaufwand in Verbindung mit bestehenden Bodenkonstruktionen von Passagiermaschinen verwendbar ist. So wird ein einfacher Einbau ermöglicht und eine Flexibilität im Hinblick auf Ladekonfigurationen geschaffen ohne wesentliche Stütz- bzw. Verankerungsstrukturen abzuändern oder neu installieren zu müssen. So sollen erfindungsgemäß bereits installierte Lochschieneneinrichtungen weiterverwendet werden, um das Frachtsystem zu verankern.

Durch die Verwendung von geeigneten Materialien sowie entsprechenden Dimensionierungen des Bodenmoduls sowie der Funktionseinrichtungen und einer teilweisen Versenkung der Funktionseinrichtungen wird Gewicht gespart und Ladehöhe gewonnen.

Unter einem flächigen Funktionseinrichtungs-Aufnahmeabschnitt ist ein konkreter Bereich wo eine Funktionseinrichtung selbstragend an dem Bodenmodul montiert wird bzw. werden kann aber auch ein Bereich der Freiraum (nach unten, in z-Richtung) schafft, so dass eine Funktionseinrichtung hineinragen kann.

In einer Ausführungsform weist ein erstes Ende (in Längsrichtung) des Bodenmoduls einen erhaben oder nach oben zeigenden ausgebildeten Verbindungsbereich und/oder ein zweites Ende des Bodenmoduls einen nach unten abgesenkten ausgebildeten Verbindungsbereich auf, insbesondere derart, dass zwei Bodenmodule überlappend verbindbar, vorzugsweise überlappend verschraubbar sind. Entsprechende Randbereiche sind beispielsweise aus der DE 10 2018 108 950 B3 bekannt, die diese Randbereiche nutzt um plane Bodenmodule stoffschlüssig zu verbinden.

Durch die modulare Ausführung der Bodenmodule kann eine Länge der entsprechenden Frachtbahn nach Bedarf verlängert oder verkürzt werden und ist somit auf unterschiedliche Flugzeugtypen (mit unterschiedlichen Decklängen) flexibel anwendbar oder erlaubt auch nur Teilbereiche eines Decks (beispielsweise eine Hälfte oder ein Drittel der Decklänge) damit zu versehen. Auch nachträgliche Umrüstungen oder nachträgliche Konstruktionsänderungen lassen sich auf diese Weise besonders einfach und vor allem schnell realisieren. Eine "Liegezeit" in der das Flugzeug umgerüstet oder gewartet wird, kann somit erheblich reduziert werden.

In einer Ausführungsform weisen die Auflageabschnitte (jeweils) mindestens eine Öffnung auf, wobei diese Öffnungen derart ausgebildet sind, dass in einem angeordneten Zustand des Bodenmoduls ein unmittelbarer Zugriff auf die jeweilige Lochschienenvorrichtung, insbesondere zumindest einen Teilabschnitt einer Eingriffskulisse (auf der Oberseite) der jeweiligen Lochschienenvorrichtung, möglich ist, um das Bodenmodul selbst und/oder eine vorzugsweise das Bodenmodul zumindest teilweise überspannende Funktionseinrichtung (formschlüssig) zu verankern.

Dadurch wird ermöglicht, dass das Bodenmodul schnell montiert werden kann, ohne dass viele zusätzliche Bearbeitungsschritte der (im Flugzeug) bereits vorhandenen Komponenten benötigt werden. Bereits durch das Einlegen der Bodenmodule derart, dass die Abschnitte der Eingriffskulisse in die Öffnungen der Bodenmodule hineinragen, werden diese geeignet ausgerichtet. Weiterhin kann eine Fixierung in Längsrichtung und/oder in Querrichtung des Flugzeugs durch einen Formschluss zwischen den Rändern der Öffnung und den Eingriffskulissen erfolgen.

Die Öffnungen tragen ferner zur Massereduzierung des Bodenmoduls bei, um das Gesamtgewicht möglichst gering zu halten.

In einer Ausführungsform weist das Bodenmodul auf einer Unterseite mehrere Kabelbefestigungseinrichtungen, z.B. Kabelclips, auf, die zur Führung und/oder Halterung mindestens eines Kabels dienen. Weiterhin kann mindestens ein, insbesondere abgedichteter, Kabeldurchgang auf die Oberseite des Bodenmoduls vorgesehen sein.

Hierdurch wird ermöglicht, dass Kabel für einen Betrieb von an dem Bodenmodul vorgesehenen Funktionseinrichtungen, insbesondere Rollenantriebseinheiten, bereits vorinstalliert werden können. Dies erhöht die Modularität und benötigte Arbeitsschritte für eine Umrüstung eines Passagierdecks werden weiter reduziert. Zudem kann dadurch ein definierter Kabelverlauf geschaffen werden, so dass eine benötigte Kabellänge auf ein Minimum reduziert wird.

In einer Ausführungsform ist der Funktionseinrichtungs-Aufnahmeabschnitt oder zumindest ein Teilbereich des Funktionseinrichtungs-Aufnahmeabschnitts zur Drainage, insbesondere als Abflusskanal von Flüssigkeit, ausgebildet. Hierbei erweist sich die bereits beschriebene Modularität der Bodenmodule als eine vorteilhafte Ausführungsform.

Dadurch, dass letztlich das Bodenmodul (selbst) als Drainage(kanal) ausgebildet ist bzw. sein kann (ggf. ohne weitere oder vergleichsweise wenige Fluidleitstrukturen), kann (Regen-)Wasser oder (allgemein) auf das Frachtdeck gelangte Flüssigkeiten einfach abführt werden. Die beschriebene Tieferlegung des Funktionseinrichtungs-Aufnahmeabschnitts bildet einen natürlichen Kanal, der Fluid in Längsrichtung, ggf. über die gesamte Länge des Frachtdecks, ableitet.

Zur Bildung des Kanals kann der gesamte Funktionseinrichtungs-Aufnahmeabschnitt plan ausgebildet sein. Es ist aber auch denkbar, konkave Abschnitte, beispielsweise zwischen Montagebereichen für Funktionseinrichtungen, insbesondere Rollenantriebseinheiten, vorzusehen. Erfindungsgemäß ist es auch möglich den gesamten Funktionseinrichtungs-Aufnahmeabschnitt bzw. den gesamten Kanal konkav auszubilden, wenn die Funktionseinrichtung im Wesentlichen eine korrespondierende Form an ihrer Unterseite aufweist.

In einer Ausführungsform weist der Funktionseinrichtungs-Aufnahmeabschnitt mindestens eine Ablaufvorrichtung auf, wobei die Ablaufvorrichtung(en) vorzugsweise als Schlauch- und/oder Rohranschluss ausgebildet ist/sind, und/oder
der Funktionseinrichtungs-Aufnahmeabschnitt des Bodenmoduls mindestens eine Revisionsöffnung aufweist, wobei die Revisionsöffnung vorzugsweise in der Nähe eines Endes in Längsrichtung des Bodenmoduls angeordnet ist und mit einem Deckel (fluiddicht) verschließbar ist.

Vorzugsweise ist die Revisionsöffnung derart angeordnet und ausgebildet, dass ein Ende des Kabels, insbesondere ein Stecker bzw. ein Stecker oder eine Buchse an dem Kabel, und/oder die Ablaufvorrichtung durch die Revisionsöffnung zugänglich ist.

Hiermit wird insgesamt die Handhabung des Bodenmoduls oder eine Wartung eines installierten Bodenmoduls weiter verbessert. Wichtige Komponenten (Elektro- und Fluidverbindungen) werden so in einen Verbindungsbereich von Bodenmodulen einfach zugänglich (für eine Wartung oder nachträgliche Umrüstung) gelagert. Zudem werden hierdurch grundsätzlich weitere Vormontageschritte, wie beispielsweise eine Vormontage eines Schlauchsystems, ermöglicht, was bei der eigentlichen Montage des Bodenmoduls wiederrum Zeit einspart und somit die Liegezeit des Flugzeugs reduziert.

In einer Ausführungsform ist mindestens ein Verstärkungsbereich zur Verstärkung bzw. Versteifung des Bodenmoduls bereitgestellt, beispielsweise durch ein oder mehrere Verstärkungselemente, das oder die vorzugsweise im Bereich des Funktionseinrichtungs-Aufnahmeabschnitts angeordnet sind.

In einer Ausführungsform ist ein derartiges Element an dem Bodenmodul montierbar und/oder durch ein in das Bodenmodul integrierbares Kernelement (beispielsweise ein Schaumkern oder dergleichen) oder integrierbare (Verbundstoff-)Kernstruktur gebildet, beispielsweise durch eine (bereichsweise) Lagenerhöhung. Alternativ oder zusätzlich kann ein Verstärkungsbereich auch durch Verbindung (beispielsweise Verschraubung) von einer Funktionseinrichtung mit dem Bodenmodul erfolgen.

Derart können auf das Bodenmodul einwirkende (vertikale) Lasten (beispielsweise der Rollenantriebseinheiten) und/oder eine entsprechende Lastverteilung optimiert werden. Insgesamt wird dadurch die Handhabung sowie die Belastbarkeit des Bodenmoduls weiter verbessert.

In einer Ausführungsform weisen die Lochschienenvorrichtung, bzw. ein Paar von Lochschienenvorrichtungen, insbesondere in regelmäßigen Abständen, Teilabschnitte von Eingriffskulissen auf, in die die im angeordneten Zustand des Bodenmoduls korrespondierende Öffnungen eingreifen.

Vorzugsweise umfasst die Eingriffskulisse eine Vielzahl von (Befestigungs-)Löchern und/oder Vorsprüngen, und insbesondere auf beiden Seiten der Lochschienenvorrichtung jeweils einen Stützabschnitt zur Auflage der Auflageabschnitte des Bodenmoduls, wobei die Stützabschnitte vorzugsweise tiefer als die Oberseite der Lochschiene angeordnet sind.

Hierdurch kann das Bodenmodul in wenigen Arbeitsschritten schnell und einfach montiert werden. Entsprechendes Eingreifen der Eingriffskulisse sorgt dafür, dass das Bodenmodul auch unter Einwirkung von Beschleunigungskräften stabil angeordnet ist und nicht verrutschen kann. Zudem können (durch die Öffnungen) weitere Funktionseinrichtungen an den Lochschienenvorrichtungen montiert werden, so dass eine flexible Anordnung, Umordnung (in andere Konfigurationen) oder Umrüstung der Frachtbahnen schnell und einfach ermöglicht wird.

In einer Ausführungsform sind mindestens zwei Bodenmodule in Längsrichtung (teilweise) überlappend, insbesondere fluiddicht, miteinander verbunden, vorzugsweise zusammengesteckt, derart, dass die jeweiligen Funktionseinrichtungs-Aufnahmeabschnitte oder Teilbereiche davon einen (gemeinsamen) Drainagekanal, insbesondere einen Abflusskanal zur Ableitung von Flüssigkeit, bilden.

Die Ausbildung eines einzigen (gemeinsamen) durchgehenden Drainagekanals bietet den Vorteil, dass (insgesamt) nur zwei Ablaufvorrichtungen benötigt werden - eine an einem vorderen Ende einer Frachtbahn (umfassend mehrere Bodenmodule) und eine an einem hinteren Ende dieser Frachtbahn. So wird anstelle einzelner Drainagewannen (wie üblich) ein einzelner Drainagekanal erhalten, der sich ggf. im Wesentlichen von vorne bis hinten im Flugzeug erstreckt. Derart wird auf vorteilhafte Art Material und Masse eingespart und die Komplexität reduziert.

Die erfindungsgemäße Aufgabe wird ebenso erfindungsgemäß durch das Frachtladesystem nach Anspruch 1 mit einer Vielzahl von Funktionseinrichtungen gelöst, wobei die Funktionseinrichtungen insbesondere eine Vielzahl von Rollenantriebseinheiten, eine Vielzahl von Längsführungsriegelelementen und/oder einer Vielzahl von Mittelführungsriegelelementen umfassen, wobei zumindest eine Vielzahl der Funktionseinrichtungen an den Lochschienen befestigt ist, und/oder zumindest eine Teilmenge der Rollenantriebseinheiten an dem Bodenmodul, insbesondere in dem Funktionseinrichtungs-Aufnahmeabschnitt, befestigt ist.

Hieraus ergeben sich die selben Vorteile wie sie bereits im Zusammenhang mit dem integralen Bodenmodul und/oder dem entsprechenden Frachtladesystem beschrieben wurden.

Zudem sei hier darauf hingewiesen, dass die im Rahmen des erfindungsgemäßen Bodenmoduls oder des Frachtladesystems beschriebenen Merkmale und Vorteile auch auf das erfindungsgemäße Frachtladesystem mit einer Vielzahl von Funktionseinrichtungen zutreffen. Merkmale des Bodenmoduls oder des Frachtladesystems sind auf das erfindungsgemäße Frachtladesystem mit einer Vielzahl von Funktionseinrichtungen übertragbar.

In einer Ausführungsform sind Mittelführungsriegelelemente und Seitenführungsriegelelemente bzw. Seitenführungselemente zur Einstellung einer ersten und einer zweiten Ladekonfiguration eingerichtet und ausgebildet.

Hierdurch wird die Flexibilität im Hinblick auf eine anfallende und zu transportierende Fracht (beispielsweise im Hinblick auf Ladedichte, (Gesamt-)Gewicht oder Containermaße) erhöht und die Handhabung des Frachtladesystems weiter verbessert.

In einer Ausführungsform sind in Längsrichtung des Flugzeugs abschnittsweise unterschiedliche Ladekonfigurationen einstellbar.

Insbesondere sind mindestens zwei Ladekonfigurationen - eine Centerline-Konfiguration und eine Side-By-Side-Konfiguration oder eine Kombination dieser Konfigurationen - einstellbar. Hierdurch kann die Flexibilität weiter optimiert werden.

In einer Ausführungsform weisen die Mittelführungsriegelelemente, insbesondere wie nachfolgend beschrieben, jeweils mindestens einen Riegel auf, wobei die Anschlagsflächen der oder des Riegel(s) deutlich, insbesondere zwischen ca. 2 cm (bzw. 19 mm oder ca. 0.75 inch) und 50 cm (ca. 20 inch), vorzugsweise zwischen 7 cm und 12 cm, weiter vorzugsweise ca. 10 cm (bzw. ca. 4 inch), voneinander beabstandet sind.

Hierdurch wird einerseits ausreichend Platz für die entsprechenden Rollenbahnen bereitgestellt. Andererseits kann der Abstand auf eine ULD Container- oder Plattengröße optimiert werden. Auf diese Weise kann der Beladevorgang optimiert werden - sowohl im Hinblick auf eine optimale Frachtraumnutzung als auch auf die entsprechende Beladezeit.

In einer Ausführungsform sind Rollenantriebseinheiten (jeweils) zwischen zwei (in Längsrichtung aufeinanderfolgenden) Mittelführungsriegelelementen und/oder auf den Funktionseinrichtungs-Aufnahmeabschnitten angeordnet.

Auf diese Weise kann ein Beladevorgang optimiert werden. Außerdem sind die Rollenantriebseinheiten geschützt angeordnet. Dies ist beispielsweise auch dann von Vorteil, wenn sie für eine entsprechende Ladekonfiguration nicht zum Einsatz kommen (sollen) und Container (von Hand) geschoben werden.

Vorzugsweise weisen die Rollenantriebseinheiten (jeweils) einen optischen Sensor zur Erfassung eines Containers oder dergleichen auf und vorzugsweise ist jede Rollenantriebseinheit (einzeln) basierend auf Signalen des Sensors in eine Betriebsposition oder eine Ruheposition versetzbar.

Dies ist speziell für eine Side-By-Side-Konfiguration von Vorteil. Hier ergibt sich (wie oben beschrieben) durch die Mittelführungsriegelelemente ein ca. 4-inch Freiraum zwischen den Containern (ULDs). Erkennt der Sensor (in diesem Freiraum) keinen Containerboden, so verbleibt die Rollenantriebseinheit in einer Ruheposition (mit abgesenkten Rollen). Dadurch werden die Rollenantriebseinheiten vor Fehlbenutzung geschützt und werden in der Side-By-Side-Konfiguration nicht beschädigt

Die erfindungsgemäße Aufgabe wird ebenso durch ein Riegelelement, vorzugsweise Mittelführungsriegelelement, zum Sichern von Containern oder dergleichen auf einem Frachtladesystem, insbesondere wie vorab beschrieben, gelöst, wobei das Riegelelement Folgendes aufweist:
- einen, vorzugsweise einstückigen, Rahmen,
- mindestens einen, vorzugsweise zwei, am Rahmen angebrachte(n), vorzugsweise abklappbare(n), Riegel zum beabstandeten Festhalten und/oder Führen von Containern oder dergleichen mit jeweils einer Kralle und einer Anschlagsfläche,
   wobei der Rahmen Folgendes aufweist:
   einen ersten und zweiten Rahmen-Auflageabschnitt zur (flächigen) Auflage und/oder Montage auf einem Paar von Lochschienenvorrichtungen, wobei der Rahmen-Auflageabschnitt eine Rahmen-Auflageebene definiert;
- einen Zentralabschnitt, innerhalb dem die Riegel angebracht sind, wobei sich ein unteres Ende des Zentralabschnitts unter die der Rahmen-Auflageebene erstreckt.

Hieraus ergeben sich die selben Vorteile wie sie bereits im Zusammenhang mit dem integralen Bodenmodul und/oder dem entsprechenden Frachtladesystem beschrieben wurden.

Zudem sei hier darauf hingewiesen, dass die im Rahmen des erfindungsgemäßen Bodenmoduls oder des Frachtladesystems beschriebenen Merkmale und Vorteile auch auf das erfindungsgemäße Riegelelement zutreffen. Merkmale des Bodenmoduls oder des Frachtladesystems sind auf das erfindungsgemäße Riegelelement übertragbar.

Die erfindungsgemäße Aufgabe wird ebenso durch ein Verfahren zum Umrüsten eines Passagierdecks in ein Frachtdeck gelöst, wobei das Verfahren folgende Schritte umfasst:
- Demontieren zumindest einer Teilmenge von ursprünglichen Bodenmodulen des Passagierdecks;
- Anordnen von einem oder mehreren modifizierter Bodenmodulen, wie vorher beschrieben, zwischen mindestens zwei Lochschienenvorrichtungen;
- Befestigen der modifizierten Bodenmodule vorzugsweise an den Lochschienenvorrichtungen;
- Befestigen mindestens einer Funktionseinrichtung an (den) Lochschienenvorrichtungen;
wobei die Funktionseinrichtung und/oder die modifizierten Bodenmodule derart ausbildet und angeordnet sind, dass sie zumindest abschnittsweise (deutlich) in einen Bereich unterhalb der demontierten ursprünglichen Bodenmodule hineinragen.

Hieraus ergeben sich die selben Vorteile wie sie bereits im Zusammenhang mit dem integralen Bodenmodul und/oder dem entsprechenden Frachtladesystem und/oder dem Riegelelement beschrieben wurden.

Zudem sei hier darauf hingewiesen, dass die im Rahmen des erfindungsgemäßen Bodenmoduls oder des Frachtladesystems oder des Riegelelements beschriebenen Merkmale und Vorteile auch auf das erfindungsgemäße Verfahren zum Umrüsten eines Passagierdecks in ein Frachtdeck zutreffen. Merkmale des Bodenmoduls oder des Frachtladesystems (mit einer Vielzahl von Funktionseinrichtungen) oder des Riegelelements sind auf das erfindungsgemäße Verfahren übertragbar.

Ebenso sind Merkmale des erfindungsgemäßen Verfahrens auf das erfindungsgemäße Bodenmodul, das Frachtsystem oder das Riegelelement übertragbar, indem die entsprechende Einrichtung derart konfiguriert wird, dass sie zur Ausführung der entsprechenden Verfahrensmerkmale geeignet ist. Bevorzugte Ausführungsformen der Erfindung ergeben sich aus den Unteransprüchen.

Nachfolgend wird die Erfindung auch hinsichtlich weiterer Einzelheiten, Merkmale und Vorteile beschrieben, die anhand der Figuren näher erläutert werden. Die beschriebenen Merkmale und Merkmalskombinationen, wie nachfolgend in den Figuren der Zeichnung gezeigt und anhand der Zeichnung beschrieben, sind nicht nur in der jeweils angegebenen Kombination, sondern auch in anderen Kombinationen oder in Alleinstellung anwendbar, ohne dass damit der Rahmen der Erfindung verlassen wird.

Hierbei zeigt:
- Fig. 1: eine schematische Ansicht eines Ausführungsbeispiels eines erfindungsgemäßen Bodenmoduls;
- Fig. 2: eine schematische Ansicht eines Querschnitts eines Ausführungsbeispiels eines erfindungsgemäßen Bodenmoduls in montiertem bzw. auf Lochschienenvorrichtungen angeordnetem Zustand;
- Fig. 3: eine vergrößerte Detailansicht aus Fig. 2;
- Fig. 4: eine Ansicht einer Unterseite eines Ausführungsbeispiels eines Bodenmoduls;
- Fig. 5: eine schematische Ansicht eines Ausführungsbeispiels eines erfindungsgemäßen Bodenmoduls mit Verstärkungs- bzw. Versteifungsbereichen;
- Fig. 6: eine schematische Ansicht eines alternativen Ausführungsbeispiels eines erfindungsgemäßen Bodenmoduls mit Verstärkungs- bzw. Versteifungsbereichen;
- Fig. 7: eine schematische Detailansicht eines Ausführungsbeispiels eines erfindungsgemäßen Frachtladesystems;
- Fig. 8: eine schematische Aufsicht auf ein Ausführungsbeispiel eines erfindungsgemäßen Frachtladesystems;
- Fig. 9: eine schematische Ansicht eines Ausführungsbeispiels eines erfindungsgemäßen Frachtladesystems;
- Fig. 10: eine Vergrößerung aus Fig. 7;
- Fig. 11: eine schematische Seitenansicht eines Ausführungsbeispiels eines erfindungsgemäßen Frachtladesystems;
- Fig. 12: eine schematische Ansicht eines Ausführungsbeispiels gemäß einem erfindungsgemäßen Riegelelement;
- Fig. 13: eine schematische Ansicht eines alternativen Ausführungsbeispiels gemäß einem erfindungsgemäßen Riegelelement;
- Fig. 14: eine schematische Querschnittansicht eines Ausführungsbeispiels eines erfindungsgemäßen Frachtladesystems;
- Fig. 15: eine Vergrößerung der schematischen Querschnittansicht des Ausführungsbeispiels eines erfindungsgemäßen Frachtladesystems gemäß Fig. 16;
- Fig. 16: eine Aufsicht auf ein Ladedeck umfassend ein erfindungsgemäßes Frachtladesystem mit unterschiedlichen Segmenten;
- Fig. 17: eine schematische Übersicht möglicher Ladekonfigurationen mit einem erfindungsgemäßen Frachtladesystem.

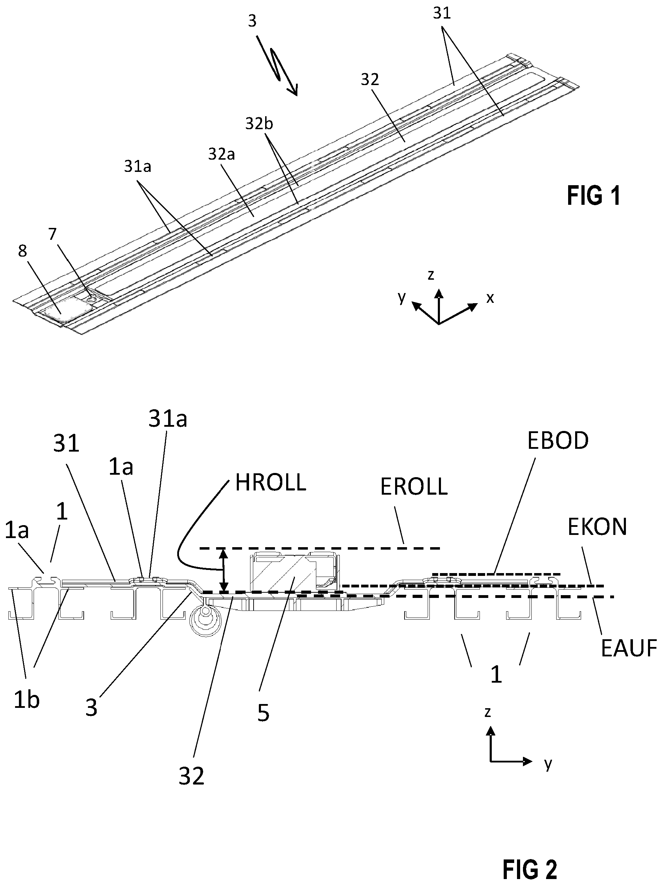

In Fig. 1 ist eine schematische Ansicht eines Ausführungsbeispiels eines erfindungsgemäßen Bodenmoduls 3 dargestellt. Das Bodenmodul 3 erstreckt sich im Wesentlichen in x Richtung (Längsrichtung des Flugzeugs). In einem Ausführungsbeispiel besitzt das Bodenmodul 3 eine Länge von ca. 126 inch (ca. 320 cm).

Das Bodenmodul 3 weist einen ersten und zweiten Auflageabschnitt 31 auf, wobei die Auflageabschnitte sich im Wesentlichen plan in die Längsrichtung (x-Richtung) erstrecken und insbesondere durch ihre Unterseiten eine Auflageebene definieren.

Ferner weist das Bodenmodul 3 einen flächigen Funktionseinrichtungs-Aufnahmeabschnitt 32 auf, der mittig zwischen den Auflageabschnitten 31 ausgebildet ist, wobei sich der Funktionseinrichtungs-Aufnahmeabschnitt 32 in Längsrichtung (x-Richtung) erstreckt und eine Aufnahmeebene EAUF bildet. Der Funktionseinrichtungs-Aufnahmeabschnitt 32 ist also gegenüber den Auflageabschnitten 31 deutlich abgesenkt. Die Abschnitte 31, 32 erstrecken sich im Wesentlichen parallel zueinander.

Unter einem Funktionseinrichtungs-Aufnahmeabschnitt 32 kein ein Bereich verstanden werden, an dem eine Funktionseinrichtung selbstragend montiert wird, aber auch ein beliebig ausgestalteter Bereich der Freiraum nach unten, in z-Richtung schafft, so dass eine Funktionseinrichtung 4,5 hineinragen kann.

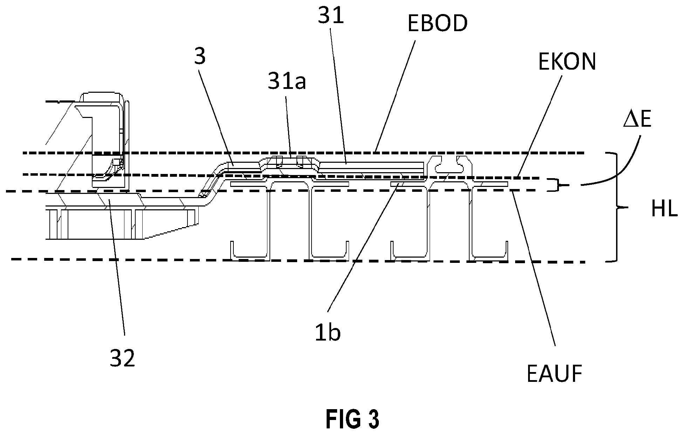

Das Bodenmodul 3 ist so beschaffen, dass die parallel zu den Auflageabschnitten 31 verlaufende Aufnahmeebene EAUF (vgl. Fig. 2 und 3) deutlich von der Auflageebene EKON nach unten hin beabstandet ist. Die Aufnahmeebene EAUF und Auflageebene EKON haben im gezeigten Beispiel einen Abstand ΔE von ca. 1,5 cm. Zwischen Frachtraumbodenebene EBOD und Aufnahmeebene EAUF ergibt sich somit ein Abstand von ca. 1,9 cm (entspricht ungefähr 0,75 Zoll), so dass bei einer überwiegenden Verwendung von sogenannten 1,25-Zoll-Funktioneinrichtungen bzw. Komponenten auf dem Frachtdeck in dem Kanal oder auf dem Funktionseinrichtungs-Aufnahmeabschnitt 32 2-Zoll-Funktionseinrichtungen bzw. Komponenten verwendet werden können.

Unterstellt man, dass sich eine Aufbauhöhe HL der Lochschienenvorrichtung 1 gemäß Fig. 1, 2 und 3 auf ca. 5 cm beläuft, so ergibt sich bei einem relativen Prozentsatz von 25% der bereits erläuterte Abstand ΔE von ca. 1,5 cm. Ist der Abstand ΔE von Aufnahmeebene EAUF und Auflageebene EKON größer als 10 % gewählt, so ergibt sich ein Abstand ΔE größer 0.5 cm.

In anderen Ausführungsbeispielen kann der Abstand ΔE von Aufnahmeebene EAUF und Auflageebene EKON größer als 10 %, insbesondere größer als 20 % insbesondere größer als 30% der Aufbauhöhe HL (siehe Fig. 3) der Lochschienenvorrichtung 1 sein.

Dieser Abstand ΔE kann variieren, je nachdem welche Aufbauhöhe die Systemkomponenten haben. Entscheidend ist, dass Systemkomponenten mit unterschiedlichen Systemhöhen erfindungsgemäß kombiniert werden können.

Der Funktionseinrichtungs-Aufnahmeabschnitt 32 kann in montiertem Zustand als Drainage(kanal) bzw. als Abflusskanal von Flüssigkeit dienen.

Daher weist das Bodenmodul 3 in dem Ausführungsbeispiel gemäß Fig. 1 mindestens eine Ablaufvorrichtung 7 auf.

Die Ablaufvorrichtung 7 kann beispielsweise als Schlauch- und/oder Rohranschluss ausgebildet sein.

Der Funktionseinrichtungs-Aufnahmeabschnitt 32 des Bodenmoduls kann ferner mindestens eine Revisionsöffnung 8 aufweisen. Dabei ist die Revisionsöffnung 8 vorzugsweise in der Nähe eines Endes in Längsrichtung des Bodenmoduls 3 angeordnet und mit einem Deckel 8a (fluiddicht) verschließbar.

Der Funktionseinrichtungs-Aufnahmeabschnitt 32 des Bodenmoduls 3 weist mittig angeordnet ein Plateau 32a auf, so dass sich zu beiden Seiten des Plateaus 32a Rinnen 32b ausbilden. Derart können Funktionseinrichtungen auf dem Plateau 32 a (leicht) erhöht angeordnet werden und (zumindest überwiegend) die Rinnen 32b als Drainagekanal verwendet werden.

Das Plateau kann ggf. auch so ausgebildet sein, um das Bodenmodul 3 zu verstärken bzw. zu versteifen.

Die Auflageabschnitte 31 weisen (jeweils) mehrere (Montage-)Öffnungen 31a auf, die sich in Längsrichtung erstrecken. Die Öffnungen 31a weisen eine Breite von ca. 35 mm auf. Eine Länge einer Öffnung 31a beträgt ca. 15 cm.

Alternativ können die Öffnungen 31a Breiten zwischen 20 mm und 40 mm aufweisen und/oder Breiten zwischen 10 und 25 cm (zwischen 4 und 10 inch) aufweisen.

Ein erstes Ende (in Längsrichtung) des Bodenmoduls 3 kann einen erhaben ausgebildeten Verbindungsbereich und/oder ein zweites Ende des Bodenmoduls 3 einen nach unten abgesenkten ausgebildeten Verbindungsbereich aufweisen. Alternativ oder Zusätzlich können die Verbindungsbereiche Clip-Nuts aufweisen, um eine Verbindung zweier Bodenmodule zu ermöglichen und/oder zu unterstützen.

Vorteilhafterweise sind die Enden des Bodenmoduls jedenfalls derart ausgebildet, dass zwei Bodenmodule 3 überlappend verbindbar, und vorzugsweise verschraubbar, sind und sich auch leicht wieder auseinandernehmen lassen. Für eine Fixierung der Verbindung können je nach Anforderung Befestigungsmittel (Bolzen, Schrauben, oder ähnliches) vorgesehen sein. Auch ein Verkleben der Bodenmodule 3 ist denkbar.

Die Verbindungsbereiche können eine oder mehrere Dichtungslippen umfassen, so dass sich (jeweils) zwei Bodenmodule 3 dicht, ggf. sogar gasdicht, verbinden lassen.

In Fig. 2 ist eine schematische Ansicht eines Querschnitts eines Ausführungsbeispiels eines erfindungsgemäßen Bodenmoduls 3 in montiertem bzw. auf Lochschienenvorrichtungen 1 angeordneten Zustand gezeigt. Fig. 3 zeigt eine detaillierte Vergrößerung von Fig. 2.

In dem Ausführungsbeispiel gemäß Fig. 2 und Fig. 3 ist in dem Funktionseinrichtungs-Aufnahmeabschnitt 32 des Bodenmoduls 3 eine Rollenantriebseinheit 5 angeordnet.

Die ersten und zweiten Auflageabschnitte 31 des Bodenmoduls 3 liegen flächig auf Stützabschnitten 1b der Lochschienenvorrichtung 1 auf.

Dabei definieren die Auflageabschnitte die Auflageebene EKON.

Der Funktionseinrichtungs-Aufnahmeabschnitt 32 bildet eine untere bzw. in z-Richtung (senkrecht auf Längsrichtung x und auf Querrichtung y) vertiefte Aufnahmeebene EAUF (vgl. insbesondere Fig. 3).

Auf diese Weise wird es ermöglicht, dass durch ein Höhenverhältnis der Auflageebene EKON und der Aufnahmeebene EAUF des Bodenmoduls 3 eine (maximale) Rollenhöhe (in Betriebszustand) EROLL einer Rollenantriebseinheit 5 angepasst werden kann (in Bezug auf die Frachtraumbodenebene EBOD). Die Rollenhöhe (im Betriebszustand) EROLL entspricht einer (Fracht-)Förderebene.

Auf diese Weise kann eine (physikalische) Höhe HROLL der Rollenantriebseinheit 5 gegenüber einer Frachtraumbodenebene EBOD ausgeblichen werden.

Die (effektive) Rollenhöhe HROLL wird durch das Bodenmodul 3 also um die Differenz aus der Höhe der Auflageebene EKON und Aufnahmeebene EAUF abgesenkt.

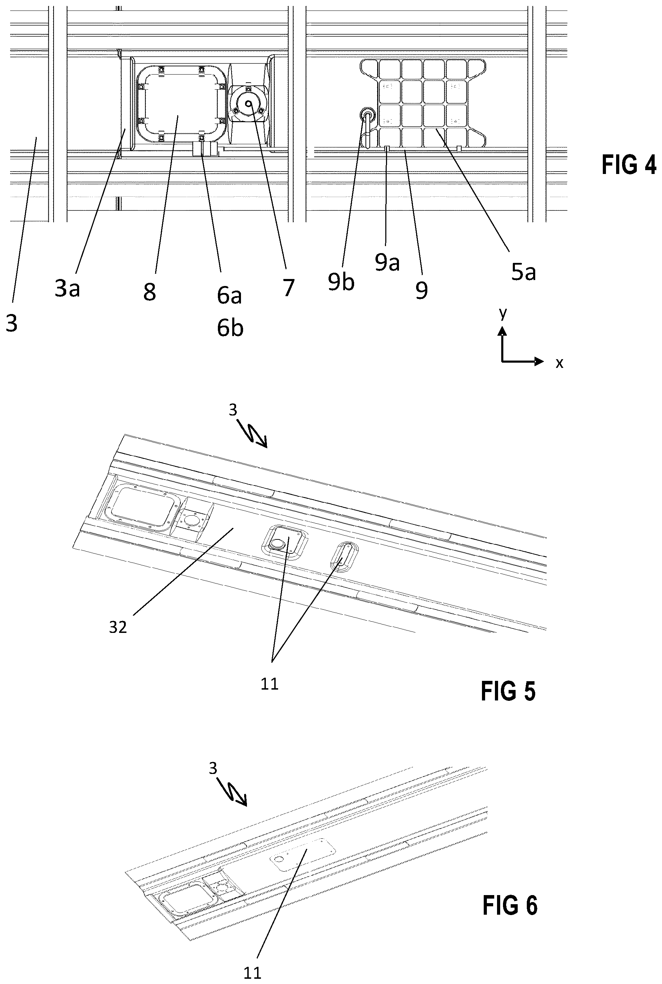

In Fig. 4 ist eine Unteransicht des Bodenmoduls 3 dargestellt.

Die Revisionsöffnung 8 ist mit einem Deckel 8a verschlossen. Hierfür können eine Vielzahl von Befestigungsmitteln (beispielsweise Schrauben) vorgesehen sein.

Vorteilhafterweise weist der Deckel 8a oder die Revisionsöffnung 8 an einem entsprechenden Rand eine Dichtlippe auf, damit die Revisionsöffnung 8 fluiddicht verschlossen werden kann.

Die Revisionsöffnung 8 ist derart angeordnet und ausgebildet, dass ein Ende des Kabels 9, insbesondere ein Stecker 6b und/oder eine Buchse 6a an dem Kabel 9, und/oder die Ablaufvorrichtung 7 durch die Revisionsöffnung 8 zugänglich ist.

Stecker 6b und Buchse 6a an dem Kabel sind pro (jeweiligem) Bodenmodul so angeordnet. In dem gezeigten Ausführungsbeispiel erstreckt sich das Kabel 9 über ein Ende in Längsrichtung des Bodenmoduls 3 hinaus und ist mit einem Stecker 6b terminiert. An dem anderen Ende des Kabels 9 ist eine korrespondierende Buchse 6a in der Nähe der Revisionsöffnung 8 fixiert angeordnet.

Derart können zwei Bodenmodule 3 zusammengesteckt werden und Stecker/Buchse 6a, 6b bequem verbunden (oder getrennt) werden. Dieses Verbinden oder Trennen von Stecker/Buchse 6a, 6b kann beispielsweise auch nach Montage/Anbringen eines Bodenmoduls 3 durch die entsprechende Zugriffsmöglichkeit durch die Revisionsöffnung 8 hindurch erfolgen.

Das Verstärkungselement 5a kann unterhalb einer Rollenantriebseinheit 5 vorgesehen sein, um eine darauf einwirkende Kraft (durch Container) zu verteilen. Das Verstärkungselement 5a kann mit dem Bodenmodul 3 und/oder (direkt) mit der Rollenantriebseinheit 5 verbunden (beispielsweise verschraubt) sein.

Das Verstärkungselement 5a kann beispielsweise aus einem (Kunstfaser-)Verbundstoff oder auch aus Aluminium hergestellt sein und mehrere Stabilisierungsrippen (beispielsweise eine Wabenstruktur) aufweisen.

Weiterhin ist Fig. 4 ein Kabeldurchgang 9b sowie mehrere Kabelbefestigungseinrichtungen 9a zu entnehmen. Die Kabelbefestigungen 9a führen das Kabel 9 entlang des Bodenmoduls 3.

Mittels eines Kabeldurchgangs 9b kann das Kabel 9 (oder ein Zweig davon) von der Unterseite des Bodenmoduls 3 auf dessen Oberseite (beispielsweise zu der Rollenantriebseinheit 5 und deren elektrischer Versorgung) geführt werden.

Der Kabeldurchgang 9b umfasst dabei vorzugsweise eine Dichtung und/oder ist fluiddichtend ausgebildet.

In Fig. 4 sind zwei verbundene Bodenmodule 3 gezeigt. In dem Ausführungsbeispiel untergreift das linke Bodenmodul 3 das rechte Bodenmodul 3 in einem Verbindungsbereich 3a.

In dem Verbindungsbereich 3a kann eine Dichtlippe oder dergleichen angeordnet sein, so dass der Verbindungsbereich 3a insgesamt fluiddicht ausgebildet ist.

In den Figuren 5 und 6 sind (jeweils) schematische Ansichten von Ausführungsbeispielen eines Bodenmoduls 3 mit alternativen Verstärkungs- bzw. Versteifungsbereichen 11.

In Fig. 5 sind unterschiedliche Verstärkungs- bzw. Versteifungsbereiche 11 in am Bodenmodul 3 dargestellt, die in dem Funktionseinrichtungs-Aufnahmeabschnitt 32 angeordnet sind.

Die Verstärkungs- bzw. Versteifungsbereiche 11 weisen unterschiedliche Geometrien (beispielswiese unterschiedliche Breiten, Längen oder Höhen) auf. So kann ein Verstärkungs- bzw. Versteifungsbereich 11 an eine darauf oder in der Nähe anzuordnende Funktionseinrichtung (nicht gezeigt) angepasst (im geometrischen Sinne) und/oder optimiert (im Hinblick auf eine Kraftverteilung) werden.

Die Verstärkungs- bzw. Versteifungsbereiche 11 können als integraler Teil des Bodenmoduls 3 ausgebildet sein oder an oder in dem Bodenmodul 3 montiert werden.

In Fig. 6 ist beispielsweise lokal eine Verstärkungsplatte in dem Funktionseinrichtungs-Aufnahmeabschnitt 32 angeordnet.

Alternativ können die Verstärkungs- bzw. Versteifungsbereiche 11 als Kerne innerhalb des Bodenmoduls ausgebildet sein. Ein derartiger Kern kann aus dem identischen (oder alternativem) Material wie das übrige Bodenmodul 3 bestehen und als lokale Verdickung des Bodenmoduls 3 ausgebildet sein. Beispielsweise durch (lokales) Einbringen von Schaumkernen oder einer lokalen Lagenerhöhung.

Alternativ oder zusätzlich können die Kerne innerhalb des Bodenmoduls 3 lokal strukturiert (beispielsweise Wabenstruktur) sein, um eine Versteifung des Bodenmoduls zu ermöglichen.

Grundsätzlich ist es möglich, dass die Verstärkungs- bzw. Versteifungsbereiche 11 Löcher und/oder Hohlräume aufweisen, um Gewicht einzusparen. Insgesamt sind sie jedoch so beschaffen, dass sie die Fluiddichte des Funktionseinrichtungs-Aufnahmeabschnitts 32 nicht beeinflussen.

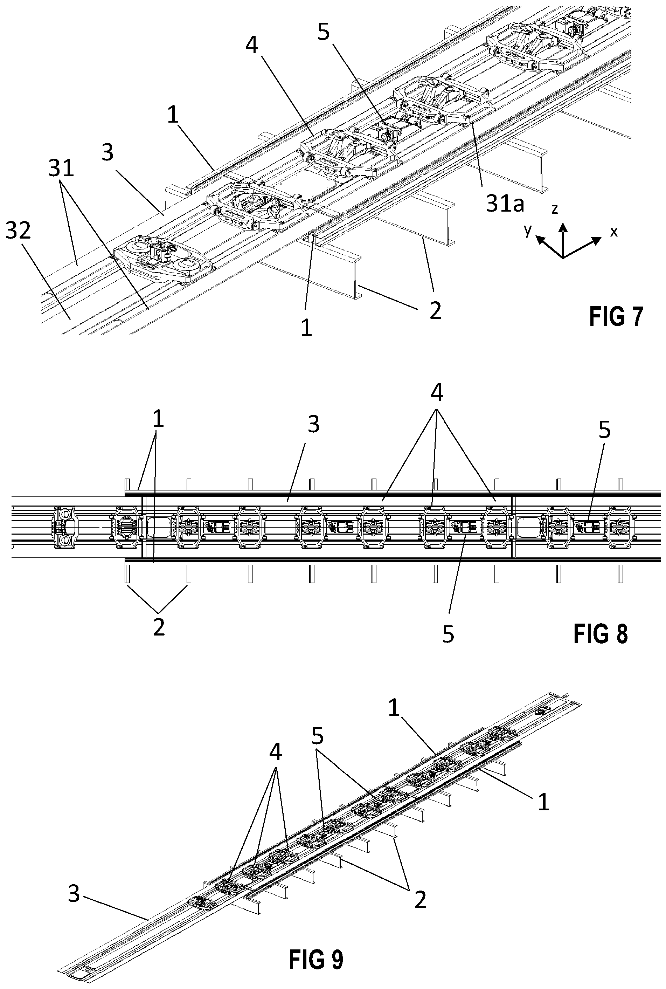

In Fig. 7 ist eine schematische Detailansicht eines Ausführungsbeispiels eines Frachtladesystems dargestellt.

Ein Bodenmodul 3 ist auf einem Paar von Lochschienenvorrichtungen 1 gelagert.

Die Lochschienenvorrichtungen 1 sind beispielsweise Sitzschienenvorrichtungen eines Passagierflugzeugs, die ursprünglich dafür ausgebildet waren mehrere Passagiersitze oder Sitzreihen zu tragen.

Die Lochschienenvorrichtungen 1 werden von Flugzeugquerträgern 2 getragen.

Die Auflageabschnitte 31 der Bodenmodule 3 weisen mehrere Öffnungen 31a auf, die derart ausgebildet sind, dass diese einen unmittelbaren Zugriff auf die jeweilige (darunterliegende) Lochschienenvorrichtung (1) erlauben.

Durch die Öffnungen 31a ist insbesondere zumindest ein Teilabschnitt einer Eingriffskulisse 1a der jeweiligen Lochschienenvorrichtung 1 zugänglich, um das Bodenmodul 3 selbst und/oder eine vorzugsweise das Bodenmodul 3 zumindest teilweise überspannende Funktionseinrichtung 4,5 in den Lochschienenvorrichtungen 1 zu verankern.

Die Funktionseinrichtungen 4, 5 können (nach unten) in den Funktionseinrichtungs-Aufnahmeabschnitt 32 hineinragen oder in diesem angeordnet sein.

Die Öffnungen 31a sind im Wesentlichen korrespondierend zu der Eingriffskulisse 1a ausgebildet bzw. dimensioniert und ermöglichen somit einen Formschluss zwischen Bodenmodul 3 und der Lochschienenvorrichtung 1.

Fig. 8 zeigt schematisch eine Aufsicht auf ein Ausführungsbeispiel eines Frachtladesystems wie in Fig. 7.

In Fig. 9 ist ein Ausführungsbeispiel für ein Frachtladesystem dargestellt, das mehrere hintereinander angeordnete Bodenmodule 3 umfasst.

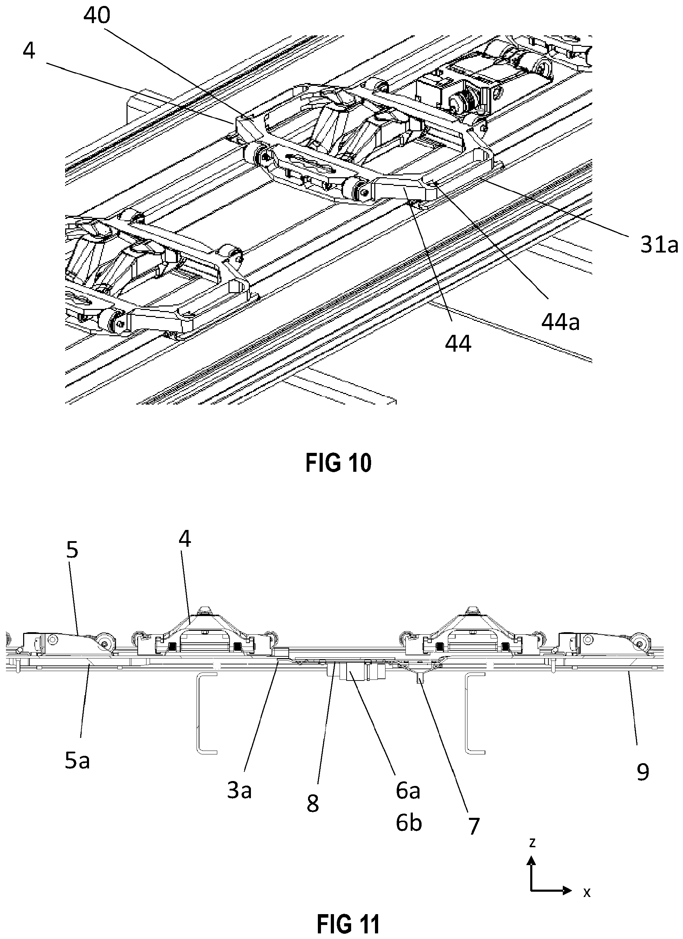

In Fig. 10 ist ein vergrößerter Bereich aus Fig. 7 dargestellt, um die Verankerung der Riegelelemente 4 und des Bodenmoduls 3 mit den Lochschienenvorrichtungen 1 zu beschreiben.

Das Bodenmodul 3 kann mittels Befestigungsmitteln (Schrauben) und Dichtband an den Lochschienenvorrichtungen 1 befestigt werden.

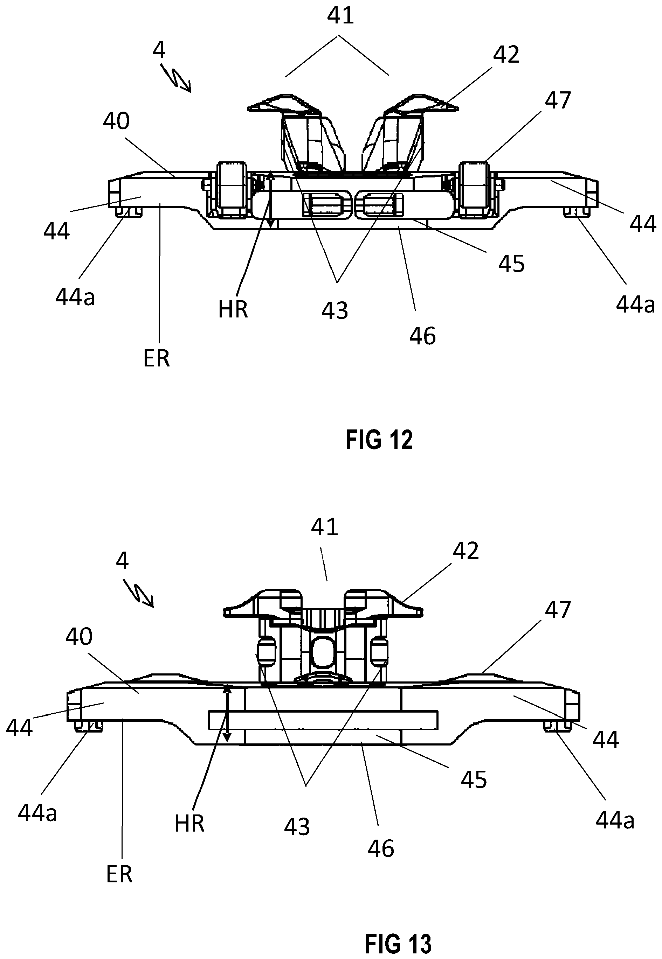

Die Riegelelemente 4 weisen einen Rahmen 40 auf. An den Rahmen-Auflageabschnitten 44 der Rahmen 40 sind Befestigungseinrichtungen 44a angeordnet, die an den Lochschienenvorrichtungen 1 (siehe auch Fig. 12 und 13) zur Montage/Befestigung des Rahmens 40 in Eingriff gebracht werden können.

Hierfür werden Befestigungseinrichtungen 44a der Riegelelemente 4 durch die Öffnungen 31a in die Eingriffskulisse 1a der Lochschienenvorrichtung 1 eingebracht (siehe Fig. 3).

Dabei ist die Eingriffskulisse 1a derart korrespondierend mit den Befestigungseinrichtungen 44a ausgebildet, dass die Befestigungseinrichtungen 44a in einer ersten Position eingehängt bzw. eingesetzt werden und sodann um eine Strecke von ca. 1 cm in eine Arretierposition verschoben werden können. Ein am Rahmen 40 befestigter Bolzen kann in der Arretierposition derart in die Eingriffskulisse 1a eingebracht werden, dass die Riegelelemente 4 in der Arretierposition arretiert sind, also nicht mehr entnommen oder verschoben werden können. Nach einem Lösen des Bolzens können die Riegelelemente 4 von der Arretierposition in die erste Position verschoben und entnommen werden.

In Fig. 11 wird eine vergrößerte Seitenansicht eines Ausführungsbeispiels eines Frachtladesystems mit Funktionseinrichtungen 4,5 und Bodenmodulen 3 gezeigt.

Zwei verbundene Bodenmodule 3 sind über einen Verbindungsbereich 3a miteinander verbunden. In dem Ausführungsbeispiel untergreift das linke Bodenmodul 3 das rechte Bodenmodul 3 in einem Verbindungsbereich 3a.

In dem Verbindungsbereich 3a kann eine Dichtlippe oder dergleichen angeordnet sein, so dass der Verbindungsbereich 3a insgesamt fluiddicht ausgebildet ist.

Für die weiteren Merkmale wird auf die vorhergehenden Ausführungen zu dem Bodenmodul 3 verwiesen.

Nachfolgend werden die Funktionseinrichtungen 4 - die Riegelelemente 4 - beschrieben.

Die Riegelelemente 4, insbesondere Mittelführungsriegelelemente, werden bei einem Frachtladesystem wie vorab beschrieben zum Sichern oder Führen von Containern verwendet.

In Fig. 12 ist ein Ausführungsbeispiel eines Mittelführungsriegelelements 4 dargestellt.

Vorzugsweise weist das Mittelführungsriegelelement 4 einen einstückigen Rahmen 40 auf.

An dem Rahmen 40 sind, vorzugsweise abklappbare, Riegel 41 zum beabstandeten Festhalten und/oder Führen von Containern oder dergleichen mit jeweils einer Kralle 42 und einer Anschlagsfläche 43, angeordnet.

Der Rahmen weist einen ersten und zweiten Rahmen-Auflageabschnitt 44 zur (flächigen) Auflage und/oder Montage auf einem Paar von Lochschienenvorrichtungen 1 auf.

Die Rahmen-Auflageabschnitte 44 definieren dabei eine Rahmen-Auflageebene ER.

An den Rahmen-Auflageabschnitten 44 sind Befestigungseinrichtungen 44a angeordnet, die an den Lochschienenvorrichtungen 1 (siehe beispielsweise Fig. 2) zur Montage/Befestigung des Rahmens 40 in Eingriff gebracht werden können.

Zudem umfasst der Rahmen 40 einen Zentralabschnitt 45, innerhalb dem die Riegel 41 angebracht sind, wobei sich ein unteres Ende 46 des Zentralabschnitts 45 unter die der Rahmen-Auflageebene ER erstreckt.

In dem gezeigten Ausführungsbeispiel beträgt ein Abstand der Anschlagsflächen 43 zwischen 7 cm und 12 cm, vorzugsweise zwischen 9 und 11, weiter vorzugsweise ca. 10 cm (in etwa 4 inch).

Im Riegelelement können Lastaufnahmeeinrichtungen 47, insbesondere Rollen, Kugelrollen oder Nachlaufrollen, vorgesehen sein. Die Lastaufnahmeeinrichtungen erleichtern das Bewegen der Container über das Riegelelement hinweg, indem sie eine (Teil-)Last der Container tragen und die Vertikalposition der Container relativ zum Riegel definieren. Die Verschiebbarkeit der Lastaufnahmeeinrichtungen ermöglicht es, die Lastaufnahmeeinrichtungen beispielsweise abhängig von der Position des Riegels im Riegelelement anzuordnen. Die Lastaufnahmeeinrichtungen können auch herausnehmbar angeordnet sein, so dass dann, wenn keine Lastaufnahmeeinrichtungen benötigt werden, Gewicht eingespart wird.

Fig. 13 zeigt eine alternative Ausführungsform eines Riegelelements 4, das sich im Wesentlichen durch die Ausformung (bzw. der Anzahl) der Riegel 41 sowie die Anordnung und Art der Lastaufnahmeeinrichtungen 47 unterscheidet. In Fig. 13 weist das Riegelelement 4 einen T-förmigen Riegel 41 auf.

Die oder der Riegel 41 der Riegelelemente 4 aus Fig. 12 und 13 sind vorzugsweise abklappbar ausgebildet. Das heißt, sie können aus ihrer gezeigten Position verschwenkt und in dem Zentralabschnitt 45 versenkt werden.

Eine Rahmenhöhe HR des Rahmens 40 in dem Zentralabschnitt 45 beträgt in einem Ausführungsbeispiel in etwa zwischen 3 und 6 cm, vorzugsweise ca. 4,5 cm, insbesondere in etwa 1,75 inch. In anderen Worten ist das Riegelelement auf eines systemhöhe von ca. 5 cm ausgelegt.

Die Rahmen-Auflageabschnitte 44 sind deutlich niedriger als der Zentralabschnitt 45 des Rahmes 40 ausgebildet. Insbesondere entspricht eine Höhe des Rahmen-Auflageabschnitts 44 lediglich zwischen 40 und 70 %, vorzugsweise 50%, weiter vorzugsweise 60% der Höhe des Zentralabschnitts 45.

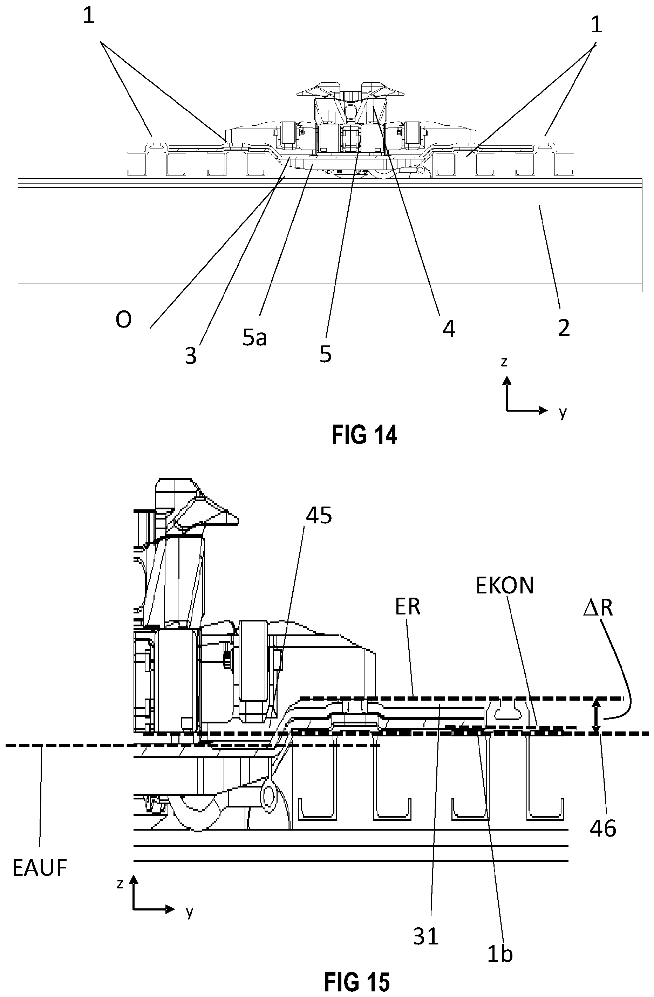

Fig. 14 zeigt eine schematische Querschnittansicht eines Ausführungsbeispiels eines Frachtladesystems mit einem Bodenmodul 3 sowie einer Rollenantriebseinrichtung 5 und einem Riegelelement, insbesondere Mittelführungsriegelelement 4.

Die Befestigungseinrichtungen des Riegelelements bzw. des Mittelführungsriegelelement 4 sind durch Öffnungen 31a in den Auflageabschnitten 31 (nicht gezeigt) des Bodenmoduls geführt in Eingriff mit der Lochschienenvorrichtung 1 gebracht.

Der Zentralabschnitt 45 (siehe Fig. 12 oder 13) ragt nach unten (negative z-Richtung) in den Funktionseinrichtungs-Aufnahmeabschnitt 32 des Bodenmoduls 3 hinein.

Fig. 15 zeigt einen vergrößerten Ausschnitt des Ausführungsbeispiels aus Fig. 14.

Die ersten und zweiten Auflageabschnitte 31 des Bodenmoduls 3 liegen auf Stützabschnitten 1b der Lochschienenvorrichtung 1 auf. Dabei definieren die Auflageabschnitte 31 eine Auflageebene EKON. Der Funktionseinrichtungs-Aufnahmeabschnitt 32 bildet eine untere bzw. in z-Richtung (senkrecht auf Längsrichtung x und auf Querrichtung y) vertiefte Aufnahmeebene EAUF (vgl. hierzu auch Fig. 2).

Der Zentralabschnitt 45 (siehe Fig. 12 oder 13) des Riegelelements 4 ragt (nach unten, negative z-Richtung) in den Funktionseinrichtungs-Aufnahmeabschnitt 32 des Bodenmoduls 3 hinein.

Insbesondere ragt der Zentralabschnitt 45 um eine Tiefe ΔR in den Funktionseinrichtungs-Aufnahmeabschnitt 32 des Bodenmoduls 3 hinein. Dabei ergibt sich die Tiefe ΔR als Abstand zwischen der Ebene , die durch das untere Ende 46 des Zentralabschnitts 45 definiert wird, und der Rahmen-Auflageebene ER, die durchden Rahmen-Auflageabschnitte 44 definiert wird.

Auf diese Weise kann eine effektive Rahmenhöhe HR (siehe Fig. 12 oder 13) vom Frachtboden aus betrachtet um den Betrag der Tiefe ΔR verringert werden. So ergeben sich bodenseitig vergleichsweise schlanke Geometrien trotz vergleichsweise massiven Rahmenstärken.

Durch die vergleichsweise flachen Auflageabschnitte 44 wird zudem das Gewicht des Rahmens reduziert ohne besondere Einbußen im Hinblick auf die Stabilität des Rahmens 40 hinnehmen zu müssen.

Insgesamt ergibt sich so ein massives, stabiles, kompaktes aber leichtes Frachtladesystem.

Den Querschnittsansichten in dem Ausführungsbeispiel gemäß Fig. 14 und 15 ist ebenso zu entnehmen, dass zwischen abgesenkten Bereichen des Bodenmoduls 3 und den Lochschienenvorrichtungen 1 ein nutzbarer Leerraum O bestehen bleibt, der ggf. für (zusätzliche) elektrische und/oder fluidleitende Leitungen und/oder Verrohrungen benutzt werden kann.

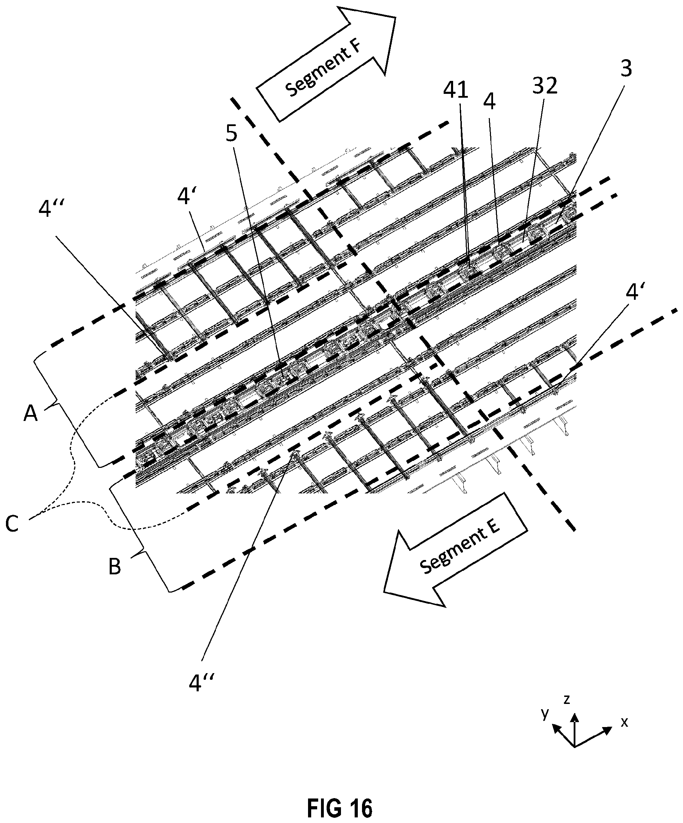

In Fig. 16 ist ein Teilabschnitt eines erfindungsgemäßen Frachtdecks gezeigt, wobei alle notwendigen Komponenten über die gesamte Breite des Frachtdecks dargestellt sind.

Das Frachtladesystem ist hierbei auf einem zu einem Frachtdeck umgerüsteten Passagierdeck eines Flugzeugs angeordnet.

Hierfür werden die ursprünglichen Bodenmodule des Passagierdecks demontiert und anschließend mehrere modifizierte Bodenmodule 3 zwischen Lochschienenvorrichtungen 1 angeordnet.

Die modifizierten Bodenmodule 3 werden schließlich mit Tragstrukturen, z.B. den Lochschienenvorrichtungen 1 verschraubt und die Mittelführungsriegelelemente 4 an den Teilabschnitten der Eingriffskulissen 1a der Lochschienenvorrichtungen 1 befestigt.

Dabei sind die Mittelführungsriegelelemente 4 und die modifizierten Bodenmodule 3 derart ausgebildet und angeordnet, dass sie zumindest abschnittsweise deutlich in einen Bereich unterhalb der demontierten ursprünglichen Bodenmodule hineinragen.

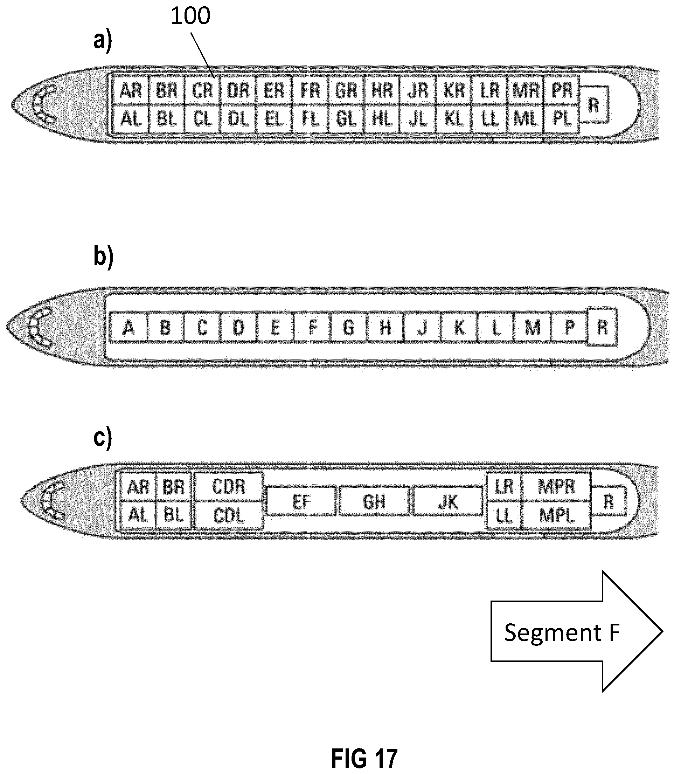

Das Frachtladesystem ist dazu ausgebildet unterschiedliche Konfigurationen einzunehmen - vgl. auch nachfolgende Ausführungen zu Fig. 17.

Hierfür sind Mittelführungsriegelelemente 4, äußere Seitenführungselemente 4' (vorzugsweise versetzbar) und innere Seitenführungselemente 4" (abklappbar) zur Einstellung einer ersten oder einer zweiten Ladekonfiguration (oder eine Kombination hiervon) eingerichtet und ausgebildet.

Mögliche Ladekonfigurationen für das erfindungsgemäße Frachtladesystem sind in Fig. 17 gezeigt (nicht abschließenden Darstellung).

In erste Ladekonfiguration a) ist eine Side-By-Side-Ladekonfiguration gezeigt. In dieser Konfiguration werden die ULDs 100 in zwei Reihen über die gesamte Breite des Frachtdecks geladen.

Ein Abstand zwischen den Container-Reihen (also zwischen zwei in Querrichtung benachbarten Containern) entspricht dem Abstand der Anschlagsflächen 43 der Riegel 41. Hier also beispielsweise ca. 4 inch bzw. ca. 10 cm.

In der zweiten Ladekonfiguration b) ist eine Centerline-Ladekonfiguration umgesetzt. In dieser Konfiguration werden die ULDs 100 in einer Reihe über eine Gesamtlänge des Frachtdecks geladen. Diese Konfiguration ist besonders dazu geeignet schwere ULDs 100 mit hohen Flächenlasten zu transportieren.

Eine dritte Ladekonfiguration c) ist eine Mischkonfiguration mit einem teilweisen Centerloading. Somit können im Bug und Heck leichtere ULDs 100 und mittig schwerere ULDs 100 geladen werden.

In der zweiten Ladekonfiguration a) werden die ULDs 100 mittig auf der Frachtbahn C (vgl. Fig. 16) gehalten und geführt. Innere Seitenführungen 4" befinden sich in einer aufgestellten Position und begrenzen die Frachtbahn C.

In der ersten Ladekonfiguration werden die ULDs 100, wie bereits erläutert, paarweise nebeneinander auf den Frachtbahnen A und B (Fig. 16) auf dem Frachtladesystem gehalten und geführt. Hierfür sind die Mittelführungsriegelelemente 4 und die Seitenführungselemente 4' in einer aufgestellten Position. Die inneren Seitenführungen 4" sind abgesenkt.

Ferner weist das Frachtladesystem Rollenantriebseinheiten 5 für eine Beförderung von Containern in der Ladekonfiguration b) auf. Für die Förderung von schweren ULDs in dieser Konfiguration sind die Rollenantriebseinheiten sehr vorteilhaft.

Alle Funktionseinrichtungen 4, 4', 4", 5 sind in einem bevorzugten Ausführungsbeispiel an den Lochschienenvorrichtungen 1 befestigt.

Das Frachtdeck kann, wie in Fig. 16 gezeigt, in unterschiedliche Segmente unterteilt sein. In dem Ausführungsbeispiel gemäß Fig. 16 gibt es im vorderen Bereich des Flugzeugs ein Segment E und im hinteren Bereich des Flugzeugs ein Segment F.

In Segment E sind Rollenantriebseinheiten 5 zum angetriebenen Fördern von schweren ULDs 100 auf dem Bodenmodul 3 in der Mitte des Frachtdecks angeordnet.

In dem Segment F sind keine Rollenantriebseinheiten 5 angeordnet, so dass hier leichtere ULDs von Hand verladen werden können. Auch fehlen in dem Segment F die inneren Seitenführungselemente 4".

Erfindungsgemäß können also unterschiedlich gut ausgestattete Segmente auf dem Frachtdeck angeboten und eingerichtet werden. Hierdurch kann das Frachtladesystem optimal auf das Anforderungsprofil des Betreibers abgestimmt werden. Unnötige Komponenten werden zur Reduktion der Anschaffungskosten und des Gewichts nicht installiert.

Beispielsweise kann ein Frachtsystem so ausgerüstet sein, dass nur die erste Ladekonfiguration a) und dritte Ladekonfiguration c) möglich ist. In diesem Ausführungsbeispiel können im Segment F die inneren Seitenführungselemente 4", wie schon in Fig. 16 gezeigt, fehlen.

Je nach Anforderung können weitere Ladekonfigurationen angeboten werden. Beispielsweise ist es mit der Ausstattung nach Fig. 16 möglich ULDs 100 zu laden, die sich über die gesamte Breite (y-Richtung) des Frachtraums erstrecken, da die Mittelführungsriegelelemente 4 abklappbar sind. Weiterhin kann, soweit man versetzbare äußere Seitenführungselemente 4' vorsieht, eine zentrische Beladung ähnlich der zweiten Ladekonfiguration b) für unterschiedliche Abmessungen der ULDs 100 angeboten werden.

An dieser Stelle sei darauf hingewiesen, dass alle oben beschriebenen Teile für sich alleine gesehen und in jeder Kombination, insbesondere der in den Zeichnungen dargestellten Details, als erfindungswesentlich beansprucht werden.
- 1: Lochschienenvorrichtung
- 1a: Eingriffskulisse
- 1b: Stützabschnitte
- 2: Querträger
- 3: Bodenmodul
- 3a: Verbindungsbereich
- 4: Mittelführungsriegelelemente
- 4',4": Seitenführungselement
- 5: Rollenantriebseinheit
- 5a: Verstärkungselement
- 6a,b: Stecker, Buchse
- 7: Ablaufvorrichtung
- 8: Revisionsöffnung
- 8a: Deckel
- 9: Kabel
- 9a: Kabelbefestigungseinrichtung
- 9b: Kabeldurchgang
- 11: Versteifungsbereich
- 31: Auflageabschnitt
- 31a: Öffnungen
- 32: Funktionseinrichtungs-Aufnahmeabschnitt
- 32a: Plateau
- 32b: Rinne
- 40: Rahmen
- 41: Riegel
- 42: Kralle
- 43: Anschlagflächen
- 44: Rahmen-Auflageabschnitte
- 44a: Befestigungseinrichtungen
- 45: Zentralabschnitt
- 46: unteres Ende des Zentralabschnitts
- 47: Lastaufnahmeeinrichtungen
- 100: ULD (Palette oder Container)

- EAUF: Aufnahmeebene
- EKON: Auflageebene
- EBOD: Frachtraumbodenebene
- ΔE: Abstand von Aufnahmeebene EAUF und Auflageebene EKON
- ER: Rahmen-Auflageebene
- E, F: Segmente
- HR: Rahmenhöhe
- HL: Aufbauhöhe der Lochschienenvorrichtung
- EROLL: Rollenhöhe
- HROLL: Höhe
- O: Leerraum
- x: Längsrichtung des Flugzeugs
- y: Querrichtung des Flugzeugs (Senkrecht zur Längsrichtung x)
- z: Höhenrichtung des Flugzeugs (Senkrecht auf x,y)

## Patentansprüche

1. Frachtladesystem für ein Flugzeug, umfassend:
- eine Vielzahl von in Längsrichtung (X) des Flugzeugs verlaufende Lochschienenvorrichtungen (1); sowie
- mindestens ein Bodenmodul (3), das auf Stützabschnitten mindestens eines Paares von Lochschienenvorrichtungen (1) angeordnet ist,
wobei das Bodenmodul (3) umfasst:
- einen ersten und zweiten Auflageabschnitt (31) zur Auflage auf die Stützabschnitte (1b) der Lochschienenvorrichtungen (1), wobei sich die Auflageabschnitte in eine Längsrichtung erstrecken und eine Auflageebene (EKON) definieren;
- einen flächigen Funktionseinrichtungs-Aufnahmeabschnitt (32), der zwischen den Auflageabschnitten (31) ausgebildet ist, wobei sich der Funktionseinrichtungs-Aufnahmeabschnitt (32) in Längsrichtung erstreckt und eine Aufnahmeebene (EAUF) bildet;
wobei das Bodenmodul (3) derart ausgebildet ist, dass die Aufnahmeebene deutlich von der Auflageebene nach unten hin beabstandet ist,
wobei das Frachtladesystem eine Vielzahl von Funktionseinrichtungen, insbesondere umfassend eine Vielzahl von Längsführungsriegelelementen und/oder einer Vielzahl von Mittelführungsriegelelementen (4), aufweist, wobei zumindest eine Vielzahl der Funktionseinrichtungen an den Lochschienen (1) befestigt ist.

2. Frachtladesystem nach Anspruch 1
**dadurch gekennzeichnet, dass**
die Lochschienenvorrichtungen (1) bzw. ein Paar von Lochschienenvorrichtungen (1), insbesondere in regelmäßigen Abständen, Teilabschnitte von Eingriffskulissen (1a) aufweist, in die die im angeordneten Zustand des Bodenmoduls korrespondierende Öffnungen (31a) eingreifen; und/oder
dass mindestens zwei Bodenmodule (3) in Längsrichtung, vorzugsweise teilweise, überlappend, insbesondere fluiddicht, miteinander verbunden, vorzugsweise verschraubt, sind, derart, dass die jeweiligen Funktionseinrichtungs-Aufnahmeabschnitte (32) oder Teilbereiche davon einen, vorzugsweise gemeinsamen, Drainagekanal, insbesondere einen Abflusskanal zur Ableitung von Flüssigkeit, bilden.

3. Frachtladesystem nach Anspruch 1,
**dadurch gekennzeichnet, dass**
Mittelführungsriegelelemente (4) und Seitenführungsriegelelemente (4s) zur Einstellung einer ersten und einer zweiten Ladekonfiguration eingerichtet und ausgebildet sind, wobei in der ersten Ladekonfiguration Container und/oder Palletten mittig werden und in der zweiten Ladekonfiguration Container paarweise nebeneinander auf dem Frachtladesystem gehalten und geführt werden.

4. Frachtladesystem nach Anspruch 1 oder 3,
**dadurch gekennzeichnet, dass**
in Längsrichtung (x) des Flugzeugs abschnittsweise unterschiedliche Ladekonfigurationen einstellbar sind.

5. Frachtladesystem nach einem der Ansprüche 1 bis 4,
**dadurch gekennzeichnet, dass**
Rollenantriebseinheiten (5), vorzugsweise jeweils, zwischen zwei, vorzugsweise in Längsrichtung aufeinanderfolgenden, Mittelführungsriegelelementen (4) und/oder auf den Funktionseinrichtungs-Aufnahmeabschnitten (32) angeordnet sind.

6. Frachtladesystem nach einem der Ansprüche 1 bis 5, insbesondere nach Anspruch 5,
**dadurch gekennzeichnet, dass** die Mittelführungsriegelelemente jeweils mindestens einen Riegel (41) aufweisen, wobei
der mindestens eine Riegel (41) des Mittelführungsriegelelements (4) aus einer Ruheposition in eine aufgestellte Position verschwenkbar ist, um eine linke Frachtbahn (A) und eine rechte Frachtbahn (B) für eine Side-By-Side-Ladekonfiguration, insbesondere mittels Anschlagflächen (43), zu begrenzen.

7. Frachtladesystem nach einem der Ansprüche 1 bis 6,
insbesondere nach Anspruch 6,
**dadurch gekennzeichnet, dass**
(die) Rollenantriebseinheiten (5), vorzugsweise jeweils, einen optischen Sensor zur Erfassung einer ULD aufweisen, wobei vorzugsweise jede Rollenantriebseinheit (einzeln) basierend auf den Signalen des Sensors aktivierbar ist und die Rollenantriebseinheiten (5) derart zwischen den Mittelführungsriegelelementen (4) angeordnet sind, dass die Rollenantriebseinheiten (5) in der aufgestellten Position der Riegel (41) der Mittelführungsriegelelemente (4) nicht aktivierbar sind.

8. Riegelelement, vorzugsweise Mittelführungsriegelelement (4), zum Sichern von Containern oder dergleichen auf einem Frachtladesystem, umfassend:
- einen, vorzugsweise einstückigen, Rahmen (40),
- mindestens einen am Rahmen (40) angebrachten Riegel (41) zum beabstandeten Festhalten und/oder Führen von Containern oder dergleichen mit jeweils einer Kralle (42) und einer Anschlagsfläche (43),
wobei der Rahmen (40) Folgendes aufweist:
einen ersten und zweiten Rahmen-Auflageabschnitt (44) zur Auflage und/oder Montage auf einem Paar von Lochschienenvorrichtungen (1), wobei der Rahmen-Auflageabschnitt (44) eine Rahmen-Auflageebene (ER) definiert;
- einen Zentralabschnitt (45), innerhalb dem die Riegel (41) angebracht sind, **dadurch gekennzeichnet, dass** sich ein unteres Ende (46) des Zentralabschnitts (45) unter die Rahmen-Auflageebene (ER) erstreckt.

9. Verfahren zum Umrüsten eines Passagierdecks in ein Frachtdeck:
- Demontieren zumindest einer Teilmenge von ursprünglichen Bodenmodulen des Passagierdecks;
- Anordnen von einen oder mehreren modifizierten Bodenmodulen (3) zwischen mindestens zwei Lochschienenvorrichtungen (1),
wobei das Bodenmodul (3) bzw. die Bodenmodule (3) Folgendes umfasst/umfassen:
- einen ersten und zweiten Auflageabschnitt (31) zur Auflage auf Stützabschnitte (1b) der Lochschienenvorrichtungen (1), wobei sich die Auflageabschnitte in eine Längsrichtung erstrecken und eine Auflageebene (EKON) definieren;
- einen flächigen Funktionseinrichtungs-Aufnahmeabschnitt (32), der zwischen den Auflageabschnitten (31) ausgebildet ist, wobei sich der Funktionseinrichtungs-Aufnahmeabschnitt (32) in Längsrichtung erstreckt und eine Aufnahmeebene (EAUF) bildet;
wobei das Bodenmodul (3) derart ausgebildet ist, dass die Aufnahmeebene deutlich von der Auflageebene nach unten hin beabstandet ist;
- Befestigen der modifizierten Bodenmodule (3) vorzugsweise an den Lochschienenvorrichtungen (1);
- Befestigen mindestens einer Funktionseinrichtung (4,5) an den Lochschienenvorrichtungen (1);
wobei die Funktionseinrichtung (4,5) und/oder die modifizierten Bodenmodule derart ausbildet und angeordnet sind, dass sie zumindest abschnittsweise in einen Bereich unterhalb der demontierten ursprünglichen Bodenmodule hineinragen.

## Claims

1. Freight loading system for an aircraft, comprising:
- a plurality of perforated rail devices (1) extending in the longitudinal direction (X) of the aircraft; and
- at least one base module (3), which is arranged on support sections of at least one pair of perforated rail devices (1),
wherein the base module (3) comprises:
- a first and second contact section (31) for contact on the support sections (1b) of the perforated rail devices (1), wherein the contact sections extend in a longitudinal direction and define a contact plane (EKON);
- a planar functional unit receptacle section (32), which is formed between the contact sections (31), wherein the functional unit receptacle section (32) extends in the longitudinal direction and forms a receptacle plane (EAUF);
wherein the base module (3) is designed such that the receptacle plane is significantly spaced apart downward from the contact plane,
wherein the freight loading system has a plurality of functional units, in particular comprising a plurality of longitudinal guidance bolt elements and/or a plurality of middle guidance bolt elements (4),
wherein at least a plurality of the functional units is fastened on the perforated rails (1).

2. Freight loading system as claimed in claim 1,
**characterized in that**
the perforated rail devices (1) or a pair of perforated rail devices (1) has, in particular at regular intervals, partial sections of engagement links (1a), in which the corresponding openings (31a) in the arranged state of the base module engage; and/or
at least two base modules (3) are connected to one another in the longitudinal direction, preferably partially, overlapping, in particular fluid-tight, preferably screwed together, such that the respective functional unit receptacle sections (32) or partial areas thereof form, preferably jointly, a drainage channel, in particular a discharge channel for discharging liquid.

3. Freight loading system as claimed in claim 1,
**characterized in that**
middle guidance bolt elements (4) and lateral guidance bolt elements (4s) are configured and designed for setting a first and a second loading configuration, wherein in the first loading configuration, containers and/or pallets are held and guided in the middle and in the second loading configuration containers are held and guided in pairs adjacent to one another on the freight loading system.

4. Freight loading system as claimed in claim 1 or 3,
**characterized in that**
different loading configurations are settable in sections in the longitudinal direction (x) of the aircraft.

5. Freight loading system as claimed in any one of claims 1 to 4,
**characterized in that**
roller drive units (5) are arranged, preferably in each case, between two middle guidance bolt elements (4), which are preferably successive in the longitudinal direction, and/or on the functional unit receptacle sections (32).

6. Freight loading system as claimed in any one of claims 1 to 5,
in particular as claimed in claim 5,
**characterized in that**
the middle guidance bolt elements each have at least one bolt (41),
wherein the at least one bolt (41) of the middle guidance bolt element (4) is pivotable from an idle position into an upright position in order to delimit a left freight path (A) and a right freight path (B) for a side-by-side loading configuration, in particular by means of stop surfaces (43).

7. Freight loading system as claimed in any one of claims 1 to 6,
in particular as claimed in claim 6,
**characterized in that**
(the) roller drive units (5), preferably each, have an optical sensor for detecting a ULD, wherein preferably each roller drive unit is (individually) activatable based on the signals of the sensor and the roller drive units (5) are arranged between the middle guidance bolt elements (4) such that the roller drive units (5) are not activatable in the upright position of the bolts (41) of the middle guidance bolt elements (4).

8. Bolt element, preferably middle guidance bolt element (4), for securing containers or the like on a freight loading system, comprising:
- a, preferably one-piece, frame (40),
- at least one bolt (41) attached to the frame (40) for the spaced-apart securing and/or guiding of containers or the like having in each case a claw (42) and a stop surface (43), wherein the frame (40) has the following:
a first and second frame contact section (44) for contact and/or installation on a pair of perforated rail devices (1), wherein the frame contact section (44) defines a frame contact plane (ER);
- a central section (45), within which the bolts (41) are attached,
**characterized in that** a lower end (46) of the central section (45) extends under the frame contact plane (ER).

9. Method for refitting a passenger deck into a cargo deck:
- removing at least a subset of original base modules of the passenger deck;
- arranging one or more modified base modules (3) between at least two perforated rail devices (1),
wherein the base module (3) or the base modules (3) comprises/comprise the following:
- a first and second contact section (31) for contact on support sections (1b) of the perforated rail devices (1), wherein the contact sections extend in a longitudinal direction and define a contact plane (EKON);
- a planar functional unit receptacle section (32), which is formed between the contact sections (31), wherein the functional unit receptacle section (32) extends in the longitudinal direction and forms a receptacle plane (EAUF);
wherein the base module (3) is designed such that the receptacle plane is significantly spaced apart downward from the contact plane;
- fastening the modified base modules (3), preferably on the perforated rail devices (1);
- fastening at least one functional unit (4, 5) on the perforated rail devices (1);
- wherein the functional unit (4, 5) and/or the modified base modules are designed and arranged such that they protrude at least in some sections into an area below the removed original base modules.

## Revendications

1. Système de chargement de fret pour un avion, comprenant :
- plusieurs dispositifs de rails perforés (1) courant dans le sens de la longueur (X) de l'avion et
- au moins un module de plancher (3) disposé sur des sections de support d'au moins une paire de dispositifs de rails perforés (1), lequel module de plancher (3) comprend :
- une première et une deuxième sections d'appui (31) destinées à s'appuyer sur les sections de support (1b) des dispositifs de rails perforés (1), lesquelles sections d'appui s'étendent dans le sens de la longueur et définissent un plan d'appui (EKON) ;
- une section plane de réception d'une installation fonctionnelle (32) qui est formée entre les sections d'appui (31), laquelle section de réception d'une installation fonctionnelle (32) s'étend dans le sens de la longueur et forme un plan de réception (EAUF) ;
le module de plancher (3) étant conçu de telle façon que le plan de réception soit nettement écarté vers le bas du plan d'appui,
le système de chargement de fret comportant plusieurs installations fonctionnelles, comprenant en particulier plusieurs éléments de retenue et de guidage longitudinaux et/ou plusieurs éléments de retenue et de guidage médians (4), plusieurs au moins des installations fonctionnelles étant fixées aux rails perforés (1).

2. Système de chargement de fret selon la revendication 1, **caractérisé en ce que** les dispositifs de rails perforés ou une paire de dispositifs de rails perforés (1) présentent, en particulier à intervalles réguliers, des sections partielles de glissières d'engagement (1a) dans lesquelles s'engagent, dans l'état disposé du module de plancher, les ouvertures (31a) correspondantes et/ou **en ce qu'**au moins deux modules de plancher (3) sont assemblés, de préférence vissés, l'un à l'autre dans le sens de la longueur, de préférence en se chevauchant partiellement, en particulier de façon étanche aux fluides, de telle façon que les sections de réception d'une installation fonctionnelle (32) ou leurs zones partielles correspondantes forment un canal de drainage, de préférence commun, en particulier un canal d'écoulement pour l'évacuation de liquide.

3. Système de chargement de fret selon la revendication 1, **caractérisé en ce que** des éléments de retenue et de guidage médians (4) et des éléments de retenue et de guidage latéraux (4s) sont configurés et conçus en vue de créer une première et une deuxième configurations de chargement, dans lesquelles des conteneurs et/ou des palettes sont retenus et guidés au centre dans la première configuration de chargement et des conteneurs sont retenus et guidés par paires l'un à côté de l'autre dans la deuxième configuration de chargement sur le système de chargement de fret.

4. Système de chargement de fret selon la revendication 1 ou 3, **caractérisé en ce que** des configurations de chargement différentes peuvent être créées par sections dans le sens de la longueur (x) de l'avion.

5. Système de chargement de fret selon l'une des revendications 1 à 4, **caractérisé en ce que** des unités d'entraînement à rouleaux (5) sont disposées, de préférence respectivement, entre deux éléments de retenue et de guidage médians (4), de préférence successifs dans le sens de la longueur, et/ou sur les sections de réception d'une installation fonctionnelle (32).

6. Système de chargement de fret selon l'une des revendications 1 à 5, en particulier selon la revendication 5, **caractérisé en ce que** les éléments de retenue et de guidage médians comportent chacun au moins un verrou (41), l'au moins un verrou (41) de l'élément de retenue et de guidage médian (4) pouvant pivoter d'une position de repos à une position installée pour délimiter une piste de chargement de fret de gauche (A) et une piste de chargement de fret de droite (B) pour une configuration de chargement côte à côte, en particulier au moyen de surfaces de butée (43).

7. Système de chargement de fret selon l'une des revendications 1 à 6, en particulier selon la revendication 6, **caractérisé en ce que** des (les) unités d'entraînement à rouleaux (5) comportent, de préférence chacune, un capteur optique pour l'acquisition d'une unité de chargement (ULD), chaque élément d'entraînement à rouleaux pouvant de préférence être activé (individuellement) sur la base des signaux du capteur et les unités d'entraînement à rouleaux (5) étant disposées entre les éléments de retenue et de guidage médians (4) de telle façon que les unités d'entraînement à rouleaux (5) ne puissent pas être activées dans la position installée des verrous (41) des éléments de retenue et de guidage médians (4).

8. Élément de retenue, de préférence élément de retenue et de guidage médian (4), pour la fixation de conteneurs ou similaires sur un système de chargement de fret, comprenant :
- un châssis (40), de préférence d'une pièce ;
- au moins un verrou (41) placé sur le châssis (40) pour retenir et/ou guider à distance des conteneurs ou similaires avec une griffe (42) et une surface de butée (43) respectives,
dans lequel le châssis (40) comporte :
- une première et une deuxième sections d'appui du châssis (44) pour l'appui et/ou le montage sur une paire de dispositifs de rails perforés (1), la section d'appui du châssis (44) définissant un plan d'appui du châssis (ER) ;
- une section centrale (45) à l'intérieur de laquelle les verrous (41) sont placés,
**caractérisé en ce qu'**une extrémité inférieure (46) de la section centrale (45) s'étend sous le plan d'appui du châssis (ER).

9. Procédé de rétrofit d'un pont de passagers en pont de fret :
- démontage d'au moins une partie des modules de plancher d'origine du pont de passagers ;
- disposition d'un ou plusieurs modules de plancher (3) modifiés entre au moins deux dispositifs de rails perforés (1),
le module de plancher (3) ou les modules de plancher (3) comprenant :
- une première et une deuxième sections d'appui (31) destinées à s'appuyer sur les sections de support (1b) des dispositifs de rails perforés (1), lesquelles sections d'appui s'étendent dans le sens de la longueur et définissent un plan d'appui (EKON) ;
- une section plane de réception d'une installation fonctionnelle (32) qui est formée entre les sections d'appui (31), laquelle section de réception d'une installation fonctionnelle (32) s'étend dans le sens de la longueur et forme un plan de réception (EAUF) ;
le module de plancher (3) étant conformé de telle façon que le plan de réception soit nettement écartée vers le bas du plan d'appui ;
- fixation des modules de plancher (3) modifiés, de préférence sur les dispositifs de rails perforés (1) ;
- fixation d'au moins une installation fonctionnelle (4, 5) sur les dispositifs de rails perforés (1),
l'installation fonctionnelle (4, 5) et/ou les modules de plancher modifiés étant conformés et disposés de telle façon qu'ils dépassent au moins en partie dans une zone située en dessous des modules de plancher d'origine démontés.
